# DEMANDE DE BREVET EUROPEEN

(11) **EP 1 458 173 A1**
(43) Date de publication de la demande: **15.09.2004**
(21) Numéro de dépôt: 03005204.7
(22) Date de dépôt: 08.03.2003
(51) Int. Cl.: H04M 17/00, H04M 7/00, H04L 12/28, H04L 12/14

(54) **Module de traitement et de transmission de données numériques pour publiphones**

(71) Demandeur: IPM International SA, 1211 Genève 16 (CH)
(72) Inventeur: Beaugiraud, Vincent, 07300 Tournon-sur-Rône (FR); Daumas, Guy, 07300 Glun (FR); Dureau, Etienne, 26500 Bourg-lès-Valence (FR); Martin, Timothée, 26000 Valence (FR)
(74) Mandataire: Wenger, Joel-Théophile

(57) **Abrégé**

Le but de la présente invention est de proposer un produit susceptible d'améliorer la rentabilité de la publiphonie en offrant une palette de services aussi large que possible tout en conservant les fonctions d'un publiphone standard.

Ce but est atteint par un module de traitement et de transmission de données numériques pour publiphone connecté d'une part au publiphone et d'autre part à un réseau de télécommunication fixe. Le module formant un boîtier indépendant du publiphone contient un logiciel stocké dans une mémoire et exécuté par l'unité centrale à laquelle sont reliés une interface d'alimentation électrique et de connexion au publiphone, un modem à haut débit de données connecté au réseau de télécommunication, des moyens de visualisation et de traitement des données numériques reçues par le modem provenant d'un ou plusieurs fournisseurs de services connectés au réseau, et des éléments d'extension optionnels.

## Description

La présente invention concerne un module de traitement et de transmission de données numériques pour publiphones connectés au réseau téléphonique fixe. Ce type de module est généralement connecté à un publiphone afin d'en compléter les fonctionnalités permettant aux opérateurs d'offrir de nouveaux services aux utilisateurs.

L'invention concerne essentiellement le domaine de la téléphonie publique utilisant des appareils ou publiphones connectés au réseau téléphonique dit commuté ou réseau fixe. Ce réseau est matérialisé par un ensemble de lignes en cuivre et de centraux téléphoniques.

Un publiphone est un appareil téléphonique installé dans des lieux accessibles au public servant à établir des communications téléphoniques sur le réseau en utilisant un moyen de paiement tel que des pièces de monnaie, des cartes prépayées ou de créd it.

Dans les pays industrialisés, le trafic des communications établies par des publiphones a fortement diminué à cause de l'arrivée en force des téléphones portables. Les opérateurs de télécommunication ont donc réduit le nombre des publiphones en améliorant la rentabilité des appareils restants et en adoptant des solutions comme:
- la concentration des publiphones dans des lieux très fréquentés par le public
- l'adaptation des appareils à plusieurs moyens de paiement (monnaie, cartes prépayées, porte-monnaie électronique, cartes bancaires ou de crédit).
- l'ajout de nouvelles possibilités d'utilisation grâce à des fonctions supplémentaires (messagerie électronique, annuaire, réservation d'hôtels, etc.)
- l'installation de bornes multimédia permettant un accès à différents services via une connexion à Internet (recherches diverses, messagerie, e-commerce, jeux, etc.)

La téléphonie seule est souvent insuffisante, mais l'introduction de nouveaux appareils tels que des publiphones multifonctions ou des bornes multimédias est souvent mal accueillie par les utilisateurs. En effet, ces appareils sont difficiles à utiliser par le grand public, et ils sont également coûteux et leur taux de panne est relativement élevé.

La téléphonie mobile de son côté s'est enrichie par de nombreuses fonctionnalités s'ajoutant à la fonction de base qui consiste à établir une liaison téléphonique standard. Ces nouvelles fonctionnalités sont basées sur la transmission de données numériques sur le réseau mobile en mode GSM (Global System for Mobile Communications) ou GPRS (General Packet Radio Service). Des services particuliers ont ainsi été développés, notamment:
- Les messageries, SMS (Short Messages Service), MMS (Multimedia Messages Services), E- mail.
- Les accès à Internet WAP (Wireless Application Protocol) ou I-mode.

Malgré le développement croissant de la téléphonie mobile, la publiphonie sur le réseau fixe, très demandée dans les régions à forte densité de population, conserve l'avantage essentiel d'un coût réduit pour les utilisateurs. Les opérateurs recherchent donc des solutions à faible coût d'acquisition et d'entretien, fiables et en même temps capables d'offrir des services à forte valeur ajoutée.

Le but de la présente invention est de proposer un produit susceptible d'améliorer la rentabilité de la publiphonie en offrant une palette de services aussi large que possible tout en conservant les fonctions d'un publiphone standard.

Un autre but est de trouver une solution permettant de concilier les avantages apportés par les fonctionnalités de la téléphonie mobile avec ceux de la publiphonie sur réseau fixe.

Ce but est atteint par un module de traitement et de transmission de données numériques pour publiphone, connecté d'une part au publiphone et d'autre part à un réseau de télécommunication fixe, comprenant un ensemble de circuits électroniques et d'interfaces pilotés par un logiciel stocké dans une mémoire associée à une unité centrale, caractérisé en ce qu'il forme un module indépendant du publiphone comprenant l'unité centrale à laquelle sont reliés une interface d'alimentation électrique et de connexion au publiphone, un modem connecté au réseau de télécommunication, des moyens de visualisation et de traitement des données numériques reçues par le modem provenant d'un ou plusieurs fournisseurs de services connectés au réseau, et des éléments d'extension optionnels.

Le module de l'invention se distingue du publiphone en tant que tel par son boîtier séparé fixé sur celui du publiphone pour former en quelque sorte un appendice. Selon une variante, le boîtier peut être détachable ce qui implique qu'il peut être rajouté à un publiphone existant sans dispositif supplémentaire.

Les fonctionnalités de base du module consistent à recevoir du réseau de téléphonie fixe, via le modem, des données venant de centres de services dédiés en principe à la téléphonie mobile. Ces données sont converties par l'unité centrale et ses interfaces afin qu'elles puissent être exploitées par un utilisateur au moyen d'un écran graphique du type LCD (Liquid Crystal Display) par exemple. Des touches de navigation disposées à proximité de l'écran permettent de déplacer un curseur sur l'écran afin de rechercher et sélectionner des objets affichés.

Par exemple, des services de l'Internet mobile du type WAP (Wireless Application Protocol), ou du type I-mode (navigation et messagerie allégées adaptées à l'Internet mobile) deviennent aisément et rapidement accessibles, grâce au modem à haut débit et à la capacité accrue de transmission de données des lignes du réseau fixe.

Ainsi, vu de l'utilisateur, l'aspect global ou l'ergonomie du publiphone ainsi que sa fonction principale de pouvoir téléphoner restent inchangés, le module aussi appelé assistant publiphone n'empêchera donc pas le fonctionnement traditionnel du publiphone lui-même. Le rôle de ce dernier par rapport au module assistant se limite à mettre en service l'assistant et à établir la connexion logique sur le réseau.

L'assistant publiphone réunit donc les avantages de la téléphonie fixe et mobile. Il est quasi universel car pouvant être installé sur les publiphones existants ou futurs, de plus, il est utilisable facilement et rapidement par n'importe quel utilisateur.

La présente invention concerne également un publiphone comprenant une première partie servant à établir une communication téléphonique sur un réseau de télécommunication fixe en utilisant un moyen de paiement caractérisé en ce qu'il comporte une seconde partie, distincte de la première, se présentant sous la forme d'un module de traitement et de transmission de données numériques, ledit module comprend une unité centrale à laquelle sont reliés une interface d'alimentation électrique et de connexion au publiphone, un modem connecté au réseau de télécommunication, des moyens de visualisation et de traitement des données numériques reçues par le modem provenant d'un ou plusieurs fournisseurs de services connectés au réseau, et des éléments d'extension optionnels.

L'invention sera mieux comprise grâce à la description détaillée qui va suivre et qui se réfère aux dessins annexés qui sont donnés à titre d'exemple nullement limitatif, dans lesquels:
La figure 1 illustre une vue d'ensemble schématique d'un publiphone avec son assistant
La figure 2 illustre un schéma bloc de l'assistant publiphone

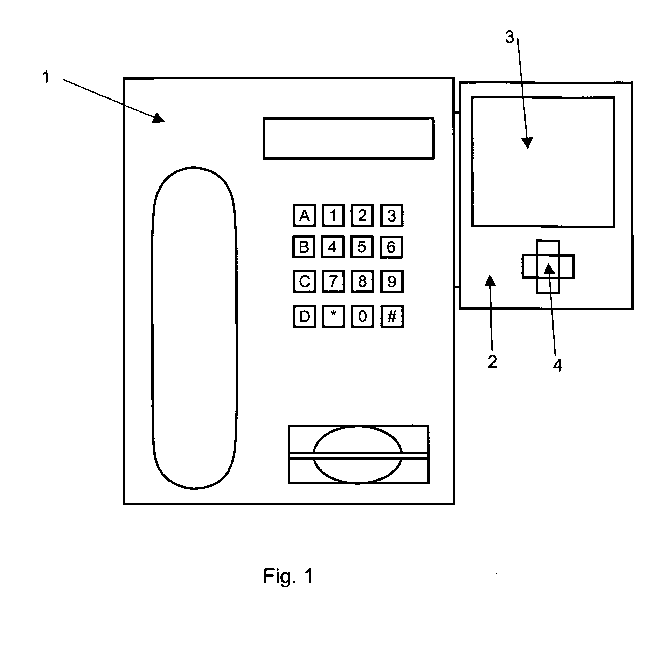

La figure 1 montre un exemple de disposition d'un module assistant (2) sur un publiphone standard (1). Le module assistant (2) comporte sur sa face visible un affichage sous forme d'un écran graphique (3) noir et blanc ou couleurs du type STN (Super Twisted Nematic) ou écran LCD à matrice passive ou TFT (Thin Film Transistor) ou écran à matrice active. Les dimensions de l'écran sont déterminées de façon à permettre l'affichage de plusieurs lignes de caractères ou d'une fenêtre d'un explorateur Internet. Des touches de navigation (4) disposées dans le voisinage de l'écran servent à déplacer un curseur dans toutes les directions du plan de l'image affichée, à effectuer une sélection d'éléments d'un menu par exemple ou encore à faire défiler l'image (scrolling).

Cet ensemble de touches peut être remplacé, selon les réalisations du module assistant, par des molettes, une boule de commande (track-ball) ou par une plaque tactile (touch-pad) similaire à celle d'un ordinateur portable. Dans une autre variante, le dispositif de navigation se trouve incorporé à un écran graphique tactile. Cet écran tactile peut ainsi occuper pratiquement toute la face frontale visible du module et présenter une image agrandie et plus détaillée.

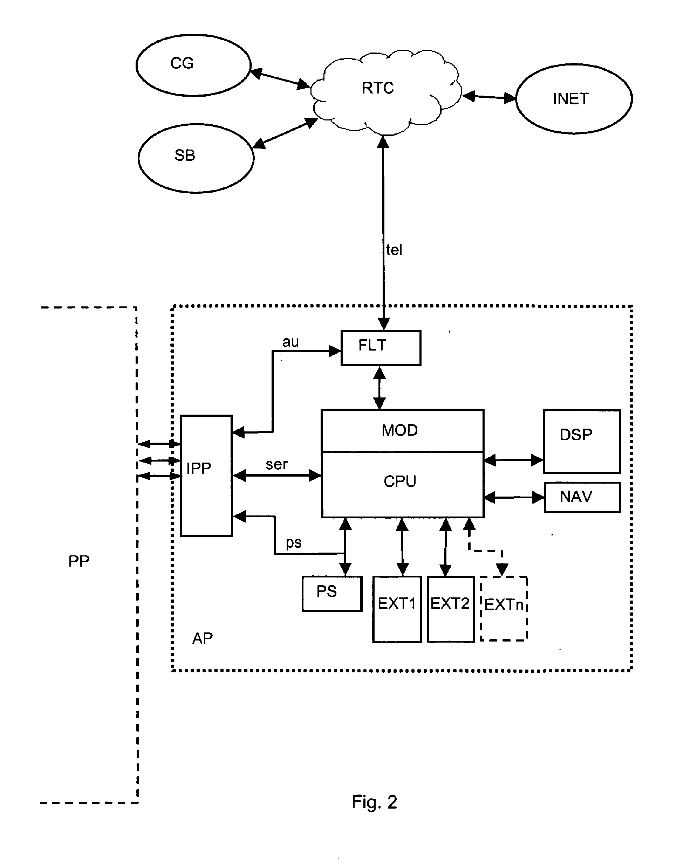

Le schéma bloc de la figure 2 montre les différents éléments et leur interconnexion contenus dans le boîtier du module assistant publiphone (AP) relié à un publiphone (PP) analogique. Le coeur du module est constitué par une unité centrale (CPU) combinée avec un modem (MOD). Ce dernier, de préférence, du type ADSL (Asymetric Digital Subscriber Line), permet des débits de données élevés, c'est-à-dire au maximum de 8 Mbit/s dans le sens allant du central téléphonique vers le modem et de 1 Mbit/s dans le sens contraire.

Selon une variante, le modem (MOD) peut être du type RNIS (Réseau Numérique à Intégration de Services), aussi appelé ISDN (Integrated Services Digital Network). Avec cette configuration, il est possible de téléphoner et d'utiliser l'assistant en même temps en optimisant l'utilisation des deux canaux B à disposition, dont le débit de chacun est de 64 kbit/s.

Selon une autre variante, le modem (MOD) peut être du type analogique, dans ce cas la connexion simultanée du publiphone et du module assistant n'est plus possible. Lorsqu'une connexion est établie par le publiphone, la ligne est occupée et le module assistant ne pourra se connecter que lorsque le publiphone libère la ligne. Inversement, lorsque le module assistant est connecté, le publiphone pourra être utilisé dès que l'assistant est déconnecté.

L'unité centrale (CPU) est en outre connectée aux éléments suivants:
- un affichage (DSP) sous forme d'un écran graphique comme illustré par la figure 1
- un dispositif de navigation (NAV) permettant de manoeuvrer un curseur sur l'affichage (DSP).
- une interface de liaison avec le publiphone (IPP) qui gère les signaux de commande venant du publiphone (ser), l'alimentation électrique du module assistant (ps) et les signaux audio (au) transitant entre la ligne téléphonique (tel) et le publiphone (PP).
- une alimentation (PS) fournissant l'énergie électrique à l'assistant à partir du réseau 230V / 50Hz par exemple et le cas échéant au publiphone.
- divers éléments d'extension (EXT1, EXT2, EXTn) optionnels tels que par exemple un capteur de température et/ou d'humidité, une caméra à cellules CCD (Charge Coupled Diode), une interface de connexion sans fil WIFI (Wireless Fidelity).

Enfin, un filtre (FLT), servant à séparer les signaux venant de la ligne (tel) suivant la fréquence, est placé en tête de ligne téléphonique. Les basses fréquences composées des signaux audio (au), y compris la composante continue, sont dirigées vers le publiphone (PP) tandis que les hautes fréquences constituées par des données numériques sont dirigées vers le modem ADSL (MOD).

Dans les variantes de l'assistant comportant un modem RNIS le filtre (FLT) n'est plus nécessaire. En effet, dans le cas ou le publiphone est de type analogique, alors le signal audio du publiphone est connecté sur une entrée POTS (Plain Old Telephone Service) du modem, et celui-ci assure la conversion analogique / RNIS. Dans le cas ou le publiphone est de type RNIS, alors le modem et le publiphone sont connectés directement sur le même bus RNIS.

Dans la variante de l'assistant comportant un modem analogique, le filtre (FLT) n'a plus la fonction de différencier les fréquences mais il assure une adaptation d'impédance. La connexion des signaux audio (au) issue de l'interface publiphone (IPP) est reliée directement à la ligne téléphonique (tel).

Le fonctionnement du publiphone (PP) en tant qu'appareil téléphonique standard n'est en aucun cas entravé par son assistant (AP) équipé d'un modem ADSL. En effet, il est possible de téléphoner avec le publiphone (PP) tout en effectuant des recherches de renseignements sur un site Internet au moyen du module assistant (AP) conformément aux spécifications ADSL.

L'unité centrale (CPU) est équipée d'un processeur et de mémoires où sont stockés d'une part les logiciels servant à piloter les interfaces (IPP, EXT1, EXT2, EXTn), l'affichage (DSP), le dispositif de navigation (NAV) et d'autre part les logiciels de navigation et d'interprétation des données en provenance des différentes sources en ligne (INET, CG, SB) via le réseau téléphonique commuté (RTC). Les données transmises ne comprennent pas seulement celles qui sont exploitées par un utilisateur mais également des données relatives à la télégestion du publiphone, la mise à jour des logiciels embarqués et à la taxation des communications. Par exemple, un centre de gestion (CG) peut interroger un certain nombre de publiphones en ligne pour vérifier leur état de fonctionnement tout comme un publiphone peut transmettre périodiquement des rapports de service au centre de gestion. La mise à jour des logiciels du publiphone ou de l'assistant peut également s'effectuer par téléchargement après connexion de l'assistant au centre de gestion (CG) concerné via le réseau (RTC). Les données concernant le paiement par carte de crédit par exemple sont aussi acheminées vers le centre de gestion ou vers un serveur bancaire (SB) pour y être traitées.

Le fonctionnement de l'assistant peut être considéré comme indépendant de celui du publiphone. En effet, ce dernier initialise la communication par l'envoi de commandes simples via la liaison série de l'interface de connexion (IPP). Ces commandes sont générées par exemple suite à la pression d'une touche de fonction sur le clavier du publiphone après l'introduction d'un moyen de paiement valide par l'utilisateur. Le système de navigation de l'assistant est déverrouillé et une fenêtre de navigation s'affiche sur l'écran permettant à l'utilisateur d'effectuer ses choix. La fin de l'accès aux services de l'assistant du publiphone intervient soit par fin de crédit soit par un ordre de l'utilisateur.

La tarification de l'accès aux services de l'assistant peut-être réalisée au prorata du temps passé ou facturé en fonction des services demandés.

La configuration tant matérielle que logicielle du module assistant est adaptée aux propriétés particulières du publiphone, et non l'inverse. En effet, pour une installation à grande échelle de modules assistants sur les publiphones existants, il est avantageux que les modifications à effectuer sur les publiphones soient réduites au strict minimum. Les publiphones courants étant conçus pour une utilisation en téléphonie uniquement ont une capacité mémoire disponible minimale, des logiciels spécifiques et des contraintes élevées au niveau de la consommation d'énergie. Dans la plupart des cas, la source d'alimentation électrique d'un publiphone est constituée par la ligne téléphonique uniquement. Par conséquent, un module additionnel connecté au publiphone devra comporter une alimentation supplémentaire connectée au réseau de distribution 230V / 50Hz par exemple.

Le module assistant peut comporter un ou plusieurs éléments d'extensions (EXT1, EXT2, EXTn) sous forme d'interfaces ou de capteurs qui sont autant d'options dépendant de services supplémentaires offerts aux utilisateurs par les opérateurs.

Un élément d'extension peut être constitué par une interface de connexion sans fil comme WIFI (Wireless Fidelity) ou Bluetooth permettant à des utilisateurs d'ordinateurs portables de se connecter à Internet. Le publiphone muni du module assistant joue ainsi le rôle de modem d'accès aux services de l'Internet.

Une autre extension peut constituer une caméra miniature dont l'objectif muni d'une cellule CCD est intégré sur la face frontale du module assistant. Ce type d'option permet la visiophonie où un utilisateur peut établir une communication téléphonique tout en transmettant son image à son correspondant équipé d'une installation similaire, l'image transmise apparaissant sur l'écran graphique de l'assistant. Une autre application consiste à transmettre par MMS (Multimedia Messages Services) les images produites par la caméra de la même manière qu'avec un téléphone portable mais avec une vitesse de transmission beaucoup plus élevée grâce au modem ADSL.

Le module assistant peut être équipé d'autres options moins sophistiquées sous forme de capteurs servant principalement à relever des paramètres environnementaux. Par exemple, la température ou le taux d'humidité sont utilisés par un centre de gestion technique à des fins statistiques pour l'évaluation de la fiabilité du publiphone et de son comportement sur le terrain.

Selon une variante de l'invention, le module assistant peut être totalement détaché du publiphone pour servir de borne multimédia simplifiée indépendante pouvant se connecter aux services de l'Internet mobile via le réseau fixe. L'interface de connexion au publiphone (IPP) est alors remplacée par exemple par des touches supplémentaires permettant de commander la mise en / hors service de la connexion du module au réseau.

## Revendications

1. Module de traitement et de transmission de données numériques pour publiphone connecté d'une part au publiphone et d'autre part à un réseau de télécommunication fixe comprenant un ensemble de circuits électroniques et d'interfaces pilotés par un logiciel stocké dans une mémoire associée à une unité centrale, **caractérisé en ce qu'**il forme un module indépendant du publiphone comprenant l'unité centrale à laquelle sont reliés une interface d'alimentation électrique et de connexion au publiphone, un modem connecté au réseau de télécommunication, des moyens de visualisation et de traitement des données numériques reçues par le modem provenant d'un ou plusieurs fournisseurs de services connectés au réseau, et des éléments d'extension optionnels.

2. Module selon la revendication 1, **caractérisé en ce que** l'interface de connexion au publiphone comprend une première liaison chargée de transférer les signaux audio du publiphone vers le réseau et une seconde liaison du type série chargée d'acheminer des commandes du publiphone au module, lesdites commandes entraînant la mise en / hors service du module et la connexion /déconnexion du publiphone à un fournisseur de services du réseau.

3. Module selon la revendication 1, **caractérisé en ce que** les moyens de visualisation et de traitement des données comprennent un écran graphique placé sur la face frontale du module et des touches de navigation disposées à proximité de l'écran permettant le déplacement d'un curseur sur ledit écran.

4. Module selon la revendication 1, **caractérisé en ce que** les données numériques proviennent de fournisseurs de l'Internet mobile via le réseau fixe et le modem, ledit module comportant des moyens logiciels de navigation stockés dans la mémoire de l'unité centrale.

5. Module selon les revendications 1 à 4, **caractérisé en ce que** le modem est du type ADSL permettant d'établir simultanément une communication téléphonique avec le publiphone et une connexion à l'Internet mobile via le réseau fixe.

6. Module selon les revendications 1 à 4, **caractérisé en ce que** le modem est du type RNIS permettant d'établir simultanément une communication téléphonique avec le publiphone et une connexion à l'Internet mobile via le réseau fixe.

7. Module selon les revendications 1 à 4, **caractérisé en ce que** le modem est du type analogique, permettant soit d'établir une communication téléphonique avec le publiphone, soit une connexion à l'Internet mobile via le réseau fixe.

8. Module selon la revendication 1, **caractérisé en ce qu'**un élément d'extension constitue une interface de connexion sans fil type WIFI (Wireless Fidelity) ou Bluetooth établissant une connexion locale avec un ordinateur portable, ledit module se connectant aux services du domaine de l'Internet via le réseau téléphonique fixe.

9. Module selon la revendication 1, **caractérisé en ce qu'**un élément d'extension constitue une caméra miniature dont l'objectif muni d'une cellule CCD (Charge Coupled Diode) est intégré sur la face frontale du module assistant.

10. Module selon la revendication 1, **caractérisé en ce qu'**un élément d'extension constitue un capteur servant à relever des paramètres environnementaux tels que la température ou le taux d'humidité, lesdits paramètres étant transmis à un centre de gestion via le modem.

11. Module selon les revendications 1 à 10, **caractérisé en ce que** les logiciels d'accès à des services évolués stockés dans la mémoire de l'unité centrale dudit module s'exécutent indépendamment du publiphone, l'ergonomie de ce dernier reste inchangée et permet l'accès aux communications téléphoniques habituelles.

12. Module selon les revendications 1 à 11, **caractérisé en ce qu'**il se connecte soit à des publiphones existants, soit à des nouveaux publiphones.

13. Module selon les revendications 1 à 12, **caractérisé en ce que** sa configuration matérielle et logicielle est adaptée aux propriétés particulières du publiphone, ledit publiphone ayant une capacité mémoire disponible minimale, des logiciels spécifiques et des contraintes élevées au niveau de la consommation d'énergie.

14. Publiphone comprenant une première partie servant à établir une communication téléphonique sur un réseau de télécommunication fixe en utilisant un moyen de paiement, **caractérisé en ce qu'**il comporte une seconde partie, distincte de la première, se présentant sous la forme d'un module de traitement et de transmission de données numériques, ledit module comprend une unité centrale à laquelle sont reliés une interface d'alimentation électrique et de connexion au publiphone, un modem connecté au réseau de télécommunication, des moyens de visualisation et de traitement des données numériques reçues par le modem provenant d'un ou plusieurs fournisseurs de services connectés au réseau, et des éléments d'extension optionnels.
